Europäisches Patentamt

European Patent Office

Office européen des brevets

(11) Publication number: **0 143 579**
A1

## (12) EUROPEAN PATENT APPLICATION

(21) Application number: **84307847.8**

(22) Date of filing: **13.11.84**

(51) Int. Cl.⁴: **F 16 B 19/14,** B 21 G 3/18

(30) Priority: **25.11.83 AU 2562/83**

(43) Date of publication of application: **05.06.85**
**Bulletin 85/23**

(84) Designated Contracting States: **CH DE FR GB IT LI**

(71) Applicant: **Olin Corporation, 427 North Shamrock Street,**
**East Alton Illinois 62024 (US)**

(72) Inventor: **Spiden, Thomas Gilbert, 62 Astley Street,**
**Montmorency Victoria 3094 (AU)**

(74) Representative: **Lambert, Hugh Richmond et al, D.**
**YOUNG & CO. 10 Staple Inn, London, WC1V 7RD (GB)**

(54) Pin-type fasteners for use with power driven tools and process for the manufacture thereof.

㊗ A pin-type fastener for use with power driven tools is produced by cold forming a metal slug to provide an intermediate form comprising a shaft (2) and an integral cup-shaped head. The shaft is then formed with a point and the whole pin heat hardened. If desired an eye (10) can be formed in the cup-shaped head before hardening, or the cup-shaped head can be internally threaded.

ACTORUM AG

1

# PIN-TYPE FASTENERS FOR USE WITH
# POWER DRIVEN TOOLS AND
# PROCESS FOR THE MANUFACTURE THEREOF

The present invention relates to pin-type fasteners adapted to be driven by explosively powered tools into a substrate, for example masonry or a metal beam as used in building construction.

So-called eye pins for use with explosively powered tools comprise a pointed stem, with a head which is pierced transversely by an eye. In use, the stem of the pin is driven by the tool into masonry or steel beam for example, leaving the head projecting so that a cable or cord can be threaded through the eye. One commonly-used type of explosively powered tool comprises a piston which is explosively driven into contact with the pin to thereby drive the pin, such tools generally being known as indirect-acting tools.

Eye pins intended for use with indirect-acting tools must be sufficiently strong to withstand the impact of the piston. This can be achieved by forming the stem and head as a one-piece solid construction, whereby the piston impacts against the rear end of the solid head. However, with this arrangement, the eye formed through the head must be of restricted diameter in order to avoid excessive weakening of the head. For larger diameter eyes, it has been proposed to form the head as a hollow shell, open at the rear end so that the piston passes through the head and impacts directly against the rear end of the stem. With this shell-type construction, the head does not need to withstand the impact of the piston, and therefore the head can be formed with a larger eye diameter. Hitherto, such shell-type eye pins are of two-piece construction with the head being formed separately from the stem, and this involves significant manufacturing costs.

According to the invention, there is provided a process for forming a pin adapted to be driven into a substrate by means of an explosively actuated tool, said process comprising shaping a metal slug by cold forming whereby to produce a stem portion and hollow head portion open at its rear end, pointing the foward end of the stem portion, and heat treating the pin whereby to provide the required hardness and ductility.

Preferably, the slug is shaped by extruding the stem portion from the slug body, shaping the slug body in heading die whereby to produce a solid head portion, and extruding the head portion rearwardly over an extrusion mandrel whereby to produce a hollow head portion of the required depth and diameter.

The hollow head portion may be drilled transversely to form an eye pin, or may be internally threaded to receive an externally threaded driven rod.

The invention also provides a pin when produced by the above process.

An embodiment of the invention will now be described, by way of example only, with reference to the accompanying drawings, in which:

Figures 1 to 5 illustrate successive stages in the manufacture of a shell-type pin; and

Figure 6 is a perspective view of the finished pin.

The shell-type pin in accordance with the preferred embodiment is of one-piece construction which is formed to basic shape by a multi-stage cold forming process, as will now be described in detail.

The pin is formed from a slug of wire which is sufficiently soft as to be capable of being formed to the required shape in the cold forming process, and which is of a composition such that after cold forming the pin can be heat treated to provide the hardness and ductility necessary to permit the pin to be explosively driven. It has been determined that to enable the cold forming process, the tensile strength of the material should be in the range 45 - 65 kg/mm$^2$.

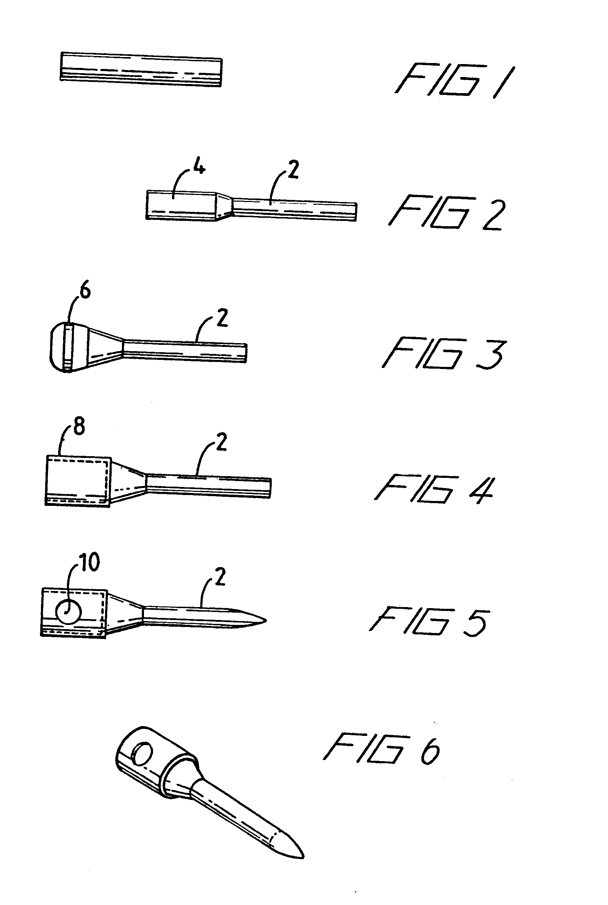

The slug (Figure 1) is placed within a first die, and, in a first cold forming step, the slug is extruded forwardly in order to produce a stem portion 2, as shown in Figure 2. The rear portion 4 of the slug retains its original diameter and constitutes the larger diameter portion shown in the figure. The extruded slug is then transferred to a heading die where, in a second cold forming process, the rear portion 4 of the slug is headed to produce a head portion 6 the required nominal diameter (Figure 3). While remaining in the heading die, the head portion 6 is then subjected to a backwards extrusion over an extrusion mandrel in order to produce a shell-like hollow cylindrical head portion 8 (Figure 4) of the required depth and diameter, the head portion 8 being open at its rear end.

After this basic shaping operation by cold forming, the shaped blank is removed from the die and the stem portion 2 is subject to a pointing operation. Preferably, pointing is effected by pinch pointing the end of the stem portion between a pair of dies. It is to be noted that the previous cold forming steps will have work-hardened the blank to a sufficient degree to enable effective pinch pointing. As an alternative to pinch pointing, the stem portion can be pointed by swage pointing or by grinding, for example. The shell-like head portion 8 is drilled transversely to provide an eye 10 (Figure 5) of the required diameter, drilling preferably being effected from opposite sides of the head portion 8 in order to avoid the formation of burrs on the outside.

After drilling, the pin is heat treated to provide the necessary hardness and ductility, the heat treatment comprising austenitising followed by austempering.

If required, the pin is finished by plating, galvanising or another anticorrosion treatment, the finished pin being shown in Figure 6.

Finally, a conventional plastics cap or other fitting for releasably retaining the pin within the barrel of an explosively actuated tool is applied to the pointed end of the stem portion.

Preferred compositions of wire from which the pin can be formed using the above process, will be given with reference to the following examples:

Example I

Fully killed steel with the following ladle analysis, in weight per cent:-

|            |               |
|------------|---------------|
| carbon     | 0.60/0.65     |
| silicon    | 0.10/0/0.30   |
| manganese  | 0.95/1.20     |
| phosphorus | 0.03 maximum  |
| sulphur    | 0.03 maximum  |

The wire is supplied in soft-drawn fully spheroidised heat treatment after cold forming involves austenitising in the range 840° - 860°C and austempering in molten salt for 60 minutes at 250° - 280°C.

Example II

Fully killed steel grain refined with aluminium, and preferably vacuum degassed.

The steel ladle analysis is as follows, in weight per cent:-

| carbon | 0.49/0.54% |
| manganese | 0.70/0.90% |
| silicon | 0.70/1.00% |
| chromium | 0.60/0.85% |
| phosphorus | 0.030 max. |
| sulphur | 0.025 max. |

Pins can be produced by the above process at a cost considerably less than the cost of producing conventional shell-type pins for use with indirect-acting tools.

Instead of drilling the head portion 10 to form an eye pin, the head portion may be threaded internally to produce a female threaded stud into which a threaded rod can be screwed.

The embodiment of the invention has been described by way of example only, and modifications are possible within the scope of the invention, which includes every novel feature or novel combination of features disclosed.

## CLAIMS

1.    A process for the manufacture of pin-type fasteners for use with power driven tools, said fasteners being of the type comprising a shaft pointed at one end and at the other provided with an integrally formed head having a rearwardly open axial recess for engagement by the piston of the power driven tool during driving of the fastener of by an externally threaded drive rod, said process being characterised by the steps of

(a)    shaping a heat hardenable metal slug by cold forming into an intermediate form comprising a shaft portion (2) and an integral head portion (6);

(b)    further shaping the intermediate form by cold forming the integral head portion (6) into a rearwardly open, cup-shaped portion (8) coaxial with the shaft portion (2);

(c)    forming the opposite end of the shaft portion into a point; and

(d)    heat treating the cold formed fastener to provide a heat treated, hardened final product.

2.    A process according to Claim 1, characterised in that before or after heat treatment a transverse hole (10) is drilled in the cold formed cup-shaped head portion (8) of the fastener.

3.    A process according to Claim 1, characterised in that before or after heat treatment the cold formed cup-shaped head portion (8) of the fastener is internally threaded.

4.    A process according to any one of Claims 1 to 3, characterised in that in step (b) the cup-shaped head portion is formed by rearward extrusion of the intermediate head portion (6) over an extrusion mandrel.

5.    A process according to any one of Claims 1 to 4, characterised in that the fastener is formed from a heat hardenable steel alloy having a tensile strength in the range 45 - 65 kg/mm$^2$.

6.    A process according to Claim 5, characterised in that the cold formed fastener is heat hardened by austenitising at a temperature in the

6

0143579

range 840 - 860°C and austempering at a temperature in the range 250 - 280°C.

7. A pin-type fastener for use with power driven tools comprising a pointed shaft portion (2) and a cup-shaped head portion (8), characterised in that the shaft portion (2) and the cup-shaped head portion (8) are integrally formed by cold working and subsequent heat hardening of a heat hardenable alloy.

8. A fastener according to Claim 7, characterised in that the heat hardenable alloy is steel.

9. A fastener according to Claim 7 or 8, characterised in that the head portion (8) of the fastener has a transverse eye (10).

10. A fastener according to Claim 7 or 8, characterised in that the cup-shaped head portion (8) of the fastener is internally threaded.

0143579

FIG 1

FIG 2

FIG 3

FIG 4

FIG 5

FIG 6

European Patent Office

**EUROPEAN SEARCH REPORT**

. Application number

| | DOCUMENTS CONSIDERED TO BE RELEVANT | EP 84307847.8 |
|---|---|---|

| Category | Citation of document with indication, where appropriate, of relevant passages | Relevant to claim | CLASSIFICATION OF THE APPLICATION (Int. Cl.4) |
|---|---|---|---|
| X | GB - A - 1 221 507 (OLIN CORPORA-TION) <br> * Fig. 1-6; claim 1 * | 1,7 | F 16 B 19/14 <br> B 21 G 3/18 |
| A | DE - A1 - 2 808 158 (BETTERMANN ELEKTRO) <br> * Fig. 1; claim 1 * | 1,7 | |
| A | DE - A - 2 237 528 (HILTI AG) <br> * Fig. 1-4; claim 1 * | 1,7 | |
| A | US - A - 3 877 340 (FRIEDRICH KARL KNOHL) <br> * Abstract * | 1,7 | |
| A | US - A - 3 491 648 (ELMAR THURNER) <br> * Fig. 1-5; claim 1 * | 1,7 | TECHNICAL FIELDS SEARCHED (Int. Cl.4) |
| A | DE - A1 - 2 845 495 (BETTERMANN ELEKTRO) <br> * Fig. 1-6; claim 1 * | 1,7 | F 16 B <br> E 04 B <br> B 21 G |

The present search report has been drawn up for all claims

| Place of search | Date of completion of the search | Examiner |
|---|---|---|
| VIENNA | 18-02-1985 | REIF |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82